(19) Europäisches Patentamt
European Patent Office
Office européen des brevets

(11) Publication number: **0 139 257 B1**

(12) # EUROPEAN PATENT SPECIFICATION

(45) Date of publication of patent specification: **28.11.90**

(51) Int. Cl.[5]: **C 08 G 77/60,** C 01 B 31/36

(21) Application number: **84111660.1**

(22) Date of filing: **28.09.84**

(54) **Process for the manufacture of silicon carbide.**

(30) Priority: **30.09.83 US 537672**

(43) Date of publication of application:
**02.05.85 Bulletin 85/18**

(45) Publication of the grant of the patent:
**28.11.90 Bulletin 90/48**

(84) Designated Contracting States:
**AT BE CH DE FR GB IT LI LU NL SE**

(56) References cited:
**EP-A-0 052 694**
**US-A-3 187 032**
**US-A-3 439 014**

**Syn. React. Inorg. Met. Chem. 4, 133-138 (1974)**

(73) Proprietor: **UNION CARBIDE CORPORATION**
**39 Old Ridgebury Road**
**Danbury Connecticut 06817 (US)**

(72) Inventor: **Schilling, Curtis Louis, Jr.**
**33 Sunset Drive**
**Croton-on-Hudson New York 10520 (US)**
Inventor: **Williams, Thomas Charles**
**16 Rolling Hill Road**
**Ridgefield Connecticut 06877 (US)**

(74) Representative: **Wuesthoff, Franz, Dr.-Ing. et al**
**Wuesthoff & Wuesthoff Patent- und**
**Rechtsanwälte Schweigerstrasse 2**
**D-8000 München 90 (DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Description of the Prior Art

Silicon carbide has long been known and appreciated for its chemical inertness, high temperature stability, semi-conductor properties, and especially its extreme hardness. In fact, the hardness of silicon carbide approaches that of diamond and boron nitride.

Silicon carbide was originally prepared by reacting inorganic silicon materials, such as silica or sand, with a carbon source, such as coke or graphite, at extremely high temperatures. The silicon carbide from such reactions was generally intractable and infusible and could only be shaped into articles by mixing with an appropriate binder and reprocessing at high temperatures once again.

A lower substituted crystalline modification of silicon carbide has also been prepared in powdered form, either by gas phase or solid state reaction. While this form of silicon carbide is more sinterable than the high temperature form mentioned above, it is still unsuitable for the formation of finely shaped articles such as fibers. Silicon carbide also has been prepared by vapor deposition from chlorosilanes (U.S.—A—4,157,541). This approach is useful for the electronics industries, and has been used for the preparation of shaped articles, such as fibers.

Still more recently, Japanese workers have reported in U.S.—A—4,100,233 the preparation of shaped articles, particularly fibers by pyrolysis of preshaped polycarbosilanes. The latter are soluble and thermoformable by standard methods and are prepared by a prepyrolysis/rearrangement/polymerization of cyclic or linear polydimethylsilanes, which in turn can be prepared from $Me_2SiCl_2$ and active metals (U.S.—A—4,052,430). These polycarbosilanes have numerous uses, being convertible to SiC in a variety of moldings and composites as taught in U.S.—A—4,110,386; 4,117,057; 4,122,139; 4,134,759;) and 4,147,538. Other routes to preparing such polycarbosilanes have been disclosed in U.S.—A—4,159,259.

Another group of Japanese inventors has disclosed in U.S.—A—4,105,455 silicon carbide compositions derived from insoluble polycarbosilanes, which are also prepared by prepyrolysis of polydimethylsilanes.

A third Japanese group discloses in Chemical Abstracts, *91*, (1979) 215596P the preparation of presumably branched polydimethylsilanes from mixtures of $Me_3SiCl$, $Me_2SiCl_2$, and $MeSiCl_3$; however, these polydimethylsilanes still require a prepyrolytic conversion to polycarbosilane before ultimate conversion to silicon carbide. The latter research group also discloses reaction of a mixture of $Me_2SiCl_2$ and $CH_2{=}CHSiMeCl_2$ with sodium/potassium dispersion to give a copolymer in which the monomer units are connected by SiSi bonds [see Chem. Abstr., *91*, 124210s (1979)].

Other approaches to silicon carbide precursors include copolymers of $Me_2SiCl_2$ and $\phi MeSiCl_2$ (U.S.—A—4,260,780 and 4,324,901) and a polymeric residue from higher boiling by-products of the well known direct reaction of MeCl with silicon metal (U.S.—A—4,310,651). Silicon carbide has been prepared by pyrolysis of silicone resins and by pyrolysis of rice hulls, both of which would be low yield processes on a weight basis.

In related work, polycarbosilanes have been pyrolyzed to shaped articles containing silicon carbide and silicon nitride, (U.S.—A—3,853,567) with the polycarbosilazanes being prepared from prepyrolysis of carbosilazanes. Polysilazanes have been mixed with standard organic polymers and spun to fibers, which have been pyrolyzed to silicon nitride/silicon carbide fibers (U.S.—A—3,892,583).

The polymeric residue employed as a silicon carbide source has been modified with a variety of agents to reduce chlorine content and increase safety toward handling or increase silicon carbide yields. These modifications are disclosed in U.S.—A—4,310,481 4,310,482; 4,298,588; 4,314,956; 4,298,559; 4,340,619; and 4,312,970.

Branched polycarbosilanes have been prepared by free radical polymerization of unsaturated silanes such as $Me_xSi(CH_2CH{=}CH_2)4\text{-}x$ where $x = 0–2$, or $Me_3SiC_6H_4CH{=}CH_2$. These materials are highly crosslinked, infusible, and insoluble, but are thermally convertible to "carbonized substances containing silicon" (including SiC). They also differ substantially in composition from the polysilahydrocarbons of the instant invention (U.S.—A—2,697,029).

Branched polycarbosilanes and their use in the production of silicon carbide are known from EP 0 052 694 A1, however, the production thereof starts out from halosilanes and not from halohydrosilanes.

There is, however, unrelated prior art involving coreactions of hydrocarbon olefins with halosilanes in the presence of active metals. The products from such prior art reactions are not effective precursors for silicon carbide, as will be demonstrated in the examples which follow.

U.S.—A—3,187,031 and 3,187,032 disclose polycarbosilanes prepared from monohalo- or dihalosilanes and hydrocarbon olefins in the presence of an active metal and a solvent. These two patents, however, disclose only linear polysilahydrocarbons, which are not effective SiC precursors when compared to the branched polysilahydrocarbons of the instant invention.

Russian workers have also reacted hydrocarbon olefins with halosilanes in the presence of active metal and a solvent [see Proc. Acad. Sci. USSR, *1962*, p 1228; *1964*, p 840; Bull, Acad. Sci. USSR, *154*, 76 (1964)]. These workers prepared either linear polycarbosilanes or used 2/1 molar ratios of hydrocarbon olefins to halosilane reactants, such that the products would not be effective SiC precursors when compared to the polycarbosilanes of the instant invention.

French workers have reacted $MeSiHCl_2$ with isoprene in the presence of magnesium metal [Synth. React. Inorga. Metal-Org. Chem., *4,* 133 (1974)], obtaining a silacyclopentene product and a polycarbosilanes. It will be shown that that polymer, prepared with magnesium, differs from a polycarbosilanes according to the instant invention prepared with potassium, and that the latter polymer is a much more effective precursor for SiC.

Summary of the Invention

It has been found that branched polycarbosilanes prepared in a one-step reaction from mixtures of hydrocarbon olefins and halohydrosilane monomers can be pyrolyzed to improved yields of SiC ceramic compositions. More particularly, this invention consists of a process for the production of silicon carbide ceramic compositions which comprises, first, reacting at least one compound of formula (I).

$$(CH_2{=}CH)_aR_bSiX_c(CH_2X)_dH_e \qquad (I)$$

wherein R is lower alkyl, X is halo, a is 0 or 1, b is 0—3, c is 1—4, d is 0—4, e is 1 or 2, a + b + c + d + e totals 4, and a + c + d + e totals at least 3, and at least one compound of formula (II),

$$R''_2C{=}CHR'' \qquad (II)$$

wherein the R'' groups are inidividually selected from hydrogen, methyl, phenyl, and vinyl groups, such that at least one R'' group is phenyl or vinyl; with active metal or metals in an inert solvent medium at an elevated temperature to form a branched polycarbosilane and, subsequently, pyrolyzing the branched polycarbosilane in an inert atmosphere to form ceramic compositions consisting primarily of silicon carbide. The branched polycarbosilane themselves constitute a key part of the invention.

Description of the Preferred Embodiments

In a broad aspect, this invention contemplates the use of branched polycarbosilanes produced by reacting, with active metal or metals in an inert solvent medium, a compound system comprising at least one silyl monomer of formula (I),

$$(CH_2{=}CH)_aR_bSiX_c(CH_2X)_dH_e \qquad (I)$$

wherein R, X, a, b, c, d, and e are as defined above and at least one hydrocarbon olefin monomer of formula (II),

$$R''_2C{=}CHR'' \qquad (II)$$

wherein R'' is as defined above. The preferred hydrocarbon olefin monomers are styrene, α-methylstyrene, butadiene, and isoprene. The compound system contains at least two different monomers, one of formula (I) and one of formula (II), such compound system being selected to favor formation of ≡SiC≡ and ≡SiSi≡ bonds.

The branched polycarbosilanes may be described as compositions which comprise units of the formula:

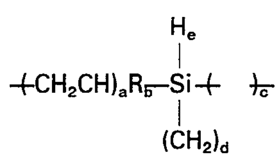

wherein R is lower alkyl (preferably methyl), X is halo (preferably chloro), a is 0 or 1, b is 0—3, c is 1—4, d is 0—4, e is 1 or 2, a + b + c + d + e totals 4, with the provision that in each of the plural units, a, b, c, d, e, and R may differ (depending on the monomers from which they originate), and that in a plurality of the units, a + c + d + e totals at least 3, such that those units are branching sites, and units derived from the hydrocarbon olefin monomers. For example, styrene provides $—CH_2CH\phi—$ units, α-methylstyrene provides $—CH_2CMe\phi—$ units, isoprene provides $—CH_2CMe{=}CHCH_2—$ units, and butadiene provides $—CH_2CH{=}CHCH_2—$ units.

The following formulas (wherein R and X have the meanings indicated above) illustrate classes of compounds which can be utilized in the formation of the branched polycarbosilanes:

| Monomers of Formula (I) | |
|---|---|
| $X_3SiH$ | $RSiHX_2$ |
| $X_2SiH_2$ | $R_2SiHX$ |

| Monomers of Formula II | |
|---|---|
| Butadiene | $CH_2{=}CHCH{=}CH_2$ |
| Isoprene | $CH_2{=}CMeCH{=}CH_2$ |
| Styrene | $CH_2{=}CH\phi$ |
| α-Methylstyrene | $CH_2{=}CMe\phi$ |
| Piperylene | $MeCH{=}CHCH{=}CH_2$ |

As indicated, it is preferred to use a mixture (*i.e.,* two or more monomer compounds selected from different classes) to make the novel branched polycarbosilanes. Such mixtures include $MeSiHCl_2$/isoprene and $MeSiHCl_2$/styrene.

The preferred silyl monomer for providing branching is thus $MeSiHCl_2$.

Molar ratios of silyl and hydrocarbon monomers are selected to promote formation of ≡SiC≡ and ≡SiSi≡ bonds as opposed to ≡CC≡ bonds, to maximize content of branched silyl units while maintaining tractability, and to mazimize the yield of SiC ceramic composition on pyrolysis. Molar ratios thus depend on the monomers used and may vary from a minimum of 0.67 to 2.0 or higher.

Ratios below 0.67, such as 0.5 or less, provide polymers too deficient in contained silicon to be effective SiC precursors.

When hydrosilyl monomers, such as $MeSiHCl_2$ and $Me_2SiHCl$ are used, particularly when the active metal is potassium, a portion of the hydrosilyl groups survive the reactions and yield branched, hydrosilyl-modified polycarbosilanes. Another portion of the hydrosilyl groups undergo reactions wherein the hydrogen (H) is lost and a new bond to silicon or carbon is formed. Hydrosilyl group retention (1) or loss (2) are shown with methyldichlorosilane as a model.

$$MeSiHCl_2 + 2K \longrightarrow -\overset{\displaystyle Me}{\underset{\displaystyle H}{\overset{|}{\underset{|}{Si}}}}- + 2KCl \qquad (1)$$

$$MeSiHCl_2 + 3K \longrightarrow -\overset{\displaystyle Me}{\overset{|}{\underset{|}{Si}}}- + KH + 2KCl \qquad (2)$$

Thus, $MeSiHCl_2$ provides trifunctional MeSi≡ branching sites during polycarbosilane preparation, as well as providing —SiMeH— units which create additional branching sites during the thermal conversion of polycarbosilane to SiC ceramic compositions.

The property which the branched polycarbosilanes possess, namely their ability to be converted into silicon carbide ceramic compositions in higher yields than prior art polycarbosilane is believed to be due to the presence of branched silyl units in the polymer backbone. The degree of branching and the molecular weight can be controlled by appropriate choices of starting monomer systems and the molar ratios within such monomer systems, such that the products range from soluble oils to soluble solids to insoluble, infusible solids. Since the branching structures of the polycarbosilanes derive from the inherent functionalities of the monomers used, the yield of silicon carbide derived from such polycarbosilanes increases with the relative content of branched units, whether such units derived from the preparative chemistry or are created during the pyrolysis process.

While not wishing to be bound by speculative theory, it appears that branching during pyrolysis occurs by reactions between hydrosilyl groups, generating ≡SiSi≡ bonds, or between hydrosilyl groups and unsaturated groups such as vinyl groups, generating ≡SiC≡ bonds.

In the production of the polycarbosilanes a monomer system is reacted with an active metal in an inert solvent medium at an elevated temperature.

The preferred active metal is potassium for reasons of high reactivity and low melting point. Other active metals are less reactive; they may be used if longer reaction times are acceptable. Alloys such as potassium/sodium may also be used. According to the prior art, lithium may destroy all hydrosilyl functionality.

The preferred solvent is anhydrous tetrahydrofuran. However, higher boiling solvents such as dioxane, 1,2-dimethoxyethane, or hydrocarbons such as toluene, xylene, or octane can be used, particularly with the less reactive metals. Hexamethylphosphoramide may also be used, but it is more costly and is a suspected carcinogen. Blends of the above solvents can be used, as can typical promoters for these types of reactions such as naphthalene or crown ethers.

The combination of potassium as the active metal and tetrahydrofuran as the solvent allows reactions to occur at the reflux temperature of tetrahydrofuran, which is just above the melting point of potassium. This combination does not allow significant reaction of chlorosilyl groups with the tetrahydrofuran solvent; such reactions have been observed with sodium and magnesium. The combination allows retention of a portion of the charged hydrosilyl groups. Potassium provides polymers having different structures than those prepared with magnesium. The potassium-prepared polymers are much more effective precursors for SiC.

The polycarbosilane-forming reactions can be run in standard laboratory glassware or chemical equipment, under inert atmospheres at atmospheric pressures, with provisions for external heating and cooling, stirring, and for incremental addition of mixtures of monomers. Thus, the process regarding polycarbosilane preparation is not narrowly critical with regard to equipment and requires no extraordinary equipment.

In a typical preparation, a weighed amount of potassium metal is placed in anhydrous tetrahydrofuran under an inert atmosphere. Heat is applied to reflux, melting the potassium, and addition of the monomer system is begun, with stirring. The reactions are often sufficiently exothermic at controlled addition rates to maintain reflux without application of external heat. After completion of addition, heat may be reapplied for any specified time period. Illustrative examples are supplied below.

Reaction conditions are thus not narrowly critical except that reaction temperature should be maintained above the melting point of the active metal and stirring should be maintained to prevent caking of by-product salts. A slight excess of the active metal is desired to insure consumption of a majority of halosilyl groups. Reactions can be terminated by addition of an alkylating agent, such as methyl chloride, or a protic material, such as water. Salt by-products are removed by filtration or water washing, and the mother liquor concentrated by stripping. The resultant polycarbosilane solution can be added to a non-solvent medium such as a methanol/acetone, precipitating the tractable solid fraction, which is collected and dried. The non-solvent mixture can be stripped to recover the liquid polycarbosilane residue, while the filtered salt can be water-washed to isolate insoluble polycarbosilanes, if any. These reaction procedures are familiar to those skilled in the art and are typical of numerous active metal reactions.

The branched polycarbosilanes ranging from soluble oils to insoluble solids, can be converted to silicon carbide compounds by themselves or in mixture with other components as disclosed for prior art polycarbosilanes, simply by heating in an inert atmosphere over specified time periods up to 1200°C or beyond.

Most useful of the branched polycarbosilanes are those which are, at room temperature, normally solid and soluble in non-protic organic solvents. They can be thermoformed into a variety of shapes such as pellets, fibers, films, *etc.,* or can be dissolved in a variety of solvents including carbon tetrachloride, methylene dichloride, trichloromethane, toluene, tetrahydrofuran and dioxane, to be cast from solution as films or spun from solution as fibers.

The range of polycarbosilanes, however, can be used as binders for the shaping of infusible, insoluble powders such as silicon carbide or silicon nitride in the same fashion as prior art polycarbosilanes. Both shaped polycarbosilane articles and shaped polycarbosilane-bound articles can be converted to silicon carbide compositions by atmospheric pressure pyrolysis.

The shaping, spinning, and casting of the polysilahydrocarbons of the present invention can be performed in commercially available equipment designed for such purposes and known to those skilled in the art. Similarly, the pyrolyses are also performed in commercially available equipment designed for such work and also known to those skilled in the art. Sintering aids typical of such high temperature reactions may be employed if desired.

The following specific examples illustrate certain aspects of the present invention and, more particularly, point out methods of evaluating the same.

All parts and percentages are by weight unless otherwise specified.

Preparation of the polycarbosilanes:

All reactions were run in standard laboratory glassware of various sizes using heating mantles, mechanical stirrers with glass or stainless steel blades, thermometers, wet ice or cooled liquid condensers, and provisions for maintenance of nitrogen or argon atmospheres. The abbreviations Me,ϕ and THF represent methyl, phenyl and tetrahydrofuran, respectively. Reported yields are based on theoretical yields calculated from the silane mixture charged.

Laboratory pyrolyses were run in quartz reactors in a tube furnace up to 800°C, and in alumina reactors

in a second tube furnace from 800°C to 1200°C. No attempt was made to maximize yields by varying pyrolysis conditions.

Example A

Reaction of 1/1 $MeSiHCl_2/CH_2{=}CMeCH{=}CH_2$ with Mg in THF

In a 250 ml apparatus consisting of a 3-necked round-bottomed flask, which was then fitted with mechanical stirrer (stainless steel blade), thermometer, addition funnel, and Dewar condenser (wet ice), with provisions for maintaining the inert atmosphere were combined 60 ml THF and 2.4 g (0.1 mol); of Mg powder. 6.4 g isoprene (0.094 mol) was added rapidly, followed by dropwise addition of 10.0 g (0.087 mol) of $MeSiHCl_2$. After an exothermic reaction to 47°C, the mixture was stirred at room temperature for 2 h. Workup yielded 5.34 g (55%) of nonvolatile polymer, b.p. greater than 44°C/l, 1mbar.

Pyrolysis of this product to 700°C yielded 10.6% of SiC composition. Instrumental analyses showed this product to differ substantially from that of Example C in terms of the structural units present in the polymers. SiC yield was substantially below that of Example C.

Example B

Reaction of 1/1 $MeSiHCl_2/CH_2{=}CHSiMe_3$ with K in THF

The procedure of Example A was followed using 31.64 g (0.81 mol) of K metal, 422.9g of anhydrous THF, and a mixture of 44.3 g (0.385 mol) of $MeSiHCl_2$ and 38.5 g (0.385 mol) of $CH_2{=}CHSiMe_3$. Workup yielded 24.36 g of soluble solid (44%) b.p. greater than 35°C/1.3 mbar.

Pyrolysis of this material to 1200°C yielded 28.5% of SiC composition. Analytical data and pyrolysis results confirm that the use of $MeSiHCl_2$ in this reaction let to formation of trifunctional branching sites in the polymer backbone resulting in effective thermal conversion to SiC.

While the product of this example does not contain units derived from a hydrocarbon olefin, it is included to demonstrate both formation of trifunctional units during reaction of $MeSiHCl_2$ and formaton of trifunctional units on pyrolysis by interaction of residual —SiH groups with olefinic groups.

Example C

Reaction of 1/1 $MeSiHCl_2/CH_2{=}CMeCH{=}CH_2$ with K in THF

The procedure of Example A was followed using 31.42 g (0.804 mol) of K metal, 373.5 g of THF, 43.7 g (0.38 mol) of $MeSiHCl_2$, and 25.5 g (0.38 mol) of isoprene. An additional 280 ml of THF was added after completion of addition, which required 205 min with heat on, due to viscosity buildup. Workup yielded 58.9% of volatile product, b.p. up to 158°/0.32 mbar and 8.93 g (25.2%) of heavies.

Pyrolysis of the latter to 1200°C yielded 49.5% of SiC composition.

Analysis of the heavies before pyrolysis showed that 80% of the $MeSiHCl_2$ had reacted to form trifunctional MeSi≡ units, while 20% reacted to form difunctional —MeSiH— units. Analysis also confirmed that the heavies differed substantially in structure from the product of Example A. Results show that the polymeric product of this example, made witih potassium, provides a much higher yield of silicon carbide ceramic composition than does the polymeric product of Example A, made with magnesium.

Example D

Reaction of 1/1 $MeSiHCl_2/CH_2{=}CH\phi$ with K in THF

The procedure of Example A was followed using 60.22 g (1.54 mol) of K metal, 802.1 g of THF, 84.46 g (0.734 mol) of $MeSiHCl_2$ and 76.5 g (0.734 mol) of styrene. Workup yielded 96.95 g (89%) of nonvolatile polymer.

Pyrolysis of this material to 1200°C yielded 25.1% of SiC composition. This example demonstrates the effectiveness of $MeSiHCl_2$ in forming polycarbosilanes which are effective precursors for SiC relative to $Me_2SiCl_2$ aas used in Example E.

Example E (Comparative example)

Reaction of 1/1 $Me_2\,SiCl_2/CH{=}CH\phi$ with K in THF

Under an inert atmosphere, 21.3 g (0.54 mol) of K metal and 179.3 g of anhydrous THF were combined in a 50 ml 3-necked round-bottomed flask, which was then fitted with mechanical stirrer (stainless steel blade), thermometer, addition funnel, and Dewar condenser (wet ice), with provisions for maintaining the inert atmosphere. The addition funnel was charged with a mixture of 33.5 g (0.26 mol) of $Me_2SiCl_2$ and 27.0 g (0.26 mol) of styrene and contents of the flask heated to reflux melting the K. Addition of the monomer mixture was completed in 31 min, and the reaction mixture then heated at reflux for 32 hrs, followed by cooling, termination with 6.63 g $H_2O$/17.24 g THF, and neutralized with 2.5 g conc. HCl. Removal of solvent by vacuum stripping left 41.2 g (97.8%) of soluble solid product. Pyrolysis of this material to only 700° left only 3.4% of residue, confirming that linear polymeric products of U.S. 3,187,031 are not effective SiC precursors.

Example F (Comparative example)

Reaction of 1/1 $Me_2SiCl_2/CH_2{=}CMeCH{=}CH_2$ with K in THF

The procedure of Example E was repeated using 23.5 g (0.60 mol) of K metal, 421.7 g anhydrous THF,

and a mixture of 36.8 g (0.29 mol) of $Me_2SiCl_2$ and 19.4 g (0.29 mol) of isoprene. Reaction mixture was heated at reflux for 5 hrs. after completion of addition. Workup yielded 10.6 g (29.6%) of polymeric residue, b.p. greater than 88°/0.7 mbar Pyrolysis of this product to 700° left only 0.8% of residue, confirming that the linear polysilahydrocarbon product of U.S. Patent 3,187,032 is not an effective SiC precursor.

Example G (Comparative example)

Reaction of 2/3 $MeSiCl_3/CH_2{=}CH\phi$ with K in THF

The procedure of Example E was followed using 22.8 g (0.58 mol) of K metal, 172.9 g anhydrous THF, and a mixture of 27.5 g (0.18 mol) of $MeSiCl_3$ and 28.8 g (0.28 mol) of styrene. Reaction was heated at reflux for 4 hrs after end of addition. Workup yielded 50.0% of soluble solid polysilahydrocarbon and 34.4% insoluble solid polysilahydrocarbon. Pyrolysis of the soluble solid to 1200° yielded 280% of Sic composition. The product of this example, with branching introduced by units derived from $MeSiCl_3$, confirms that branched structures are needed for conversion to SiC when results are compared to those of Example A.

Example H (Comparative example)

Reaction of 1/1 $MeSiCl_3/CH_2{=}CH\phi$ with K in THF

Example G was repeated except that a 1/1 molar ratio of $MeSiCl_3/CH_2{=}CH\phi$ was used. Workup yielded 6.6% of soluble solid and 91.0% of insoluble solid product. Pyrolysis of the latter to 1200° provided 30.9% of SiC composition.

**Claims**

1. A process for producing silicon carbide ceramic compositions by pyrolyzing in an inert atmosphere a branched polycarbosilane comprising

A) silyl units of the formula:

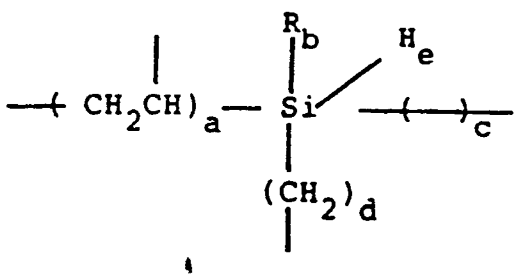

wherein R is a lower alkyl, a is 0 or 1, b is 0—3, c is at least 1, d represents the number of $-CH_2-$ groups individually bonded to Si and is 0—4, e is 1 or 2, a + b + c + d + e = 4 with the provisions that, in each of the plural units, a, b, c, d, e and R may differ (depending on the monomers from which they originate), and that in a plurality of such units, a + c + d + e must total at least 3 (such that branching derives from silyl units), and

B) hydrocarbon units derived from the olefin monomers of the formula:

$$R''_2C{=}CHR''$$

wherein the R'' groups are selected from H, Me, phenyl, or vinyl such that at least one R'' group is phenyl or vinyl, obtained by reacting, with active metal in an inert solvent medium at an elevated temperature

a) a compound comprising at least one silylmonomer of formula (I)

$$(CH_2{=}CH)_aR_bSiX_c(CH_2X)_dH_e \quad (I)$$

wherein X is halo, with or without other silyl monomers of formula (I) wherein a + c + d + e totals 1 or 2, and

b) at least one olefin monomer of formula (II)

$$R''_2C{=}CHR'' \quad (II)$$

wherein the molar ratio of silyl monomer(s) to olefin monomer(s) is at least 0.67.

2. The process of claim 1 wherein R is methyl.

3. The process of claim 1 or 2 wherein c = 3.

4. The process of claims 1 to 3 wherein the active metal is potassium, sodium or an alloy of both.

5. The process of claims 1 to 4 wherein the inert solvent is tetrahydrofuran.

6. The process of claims 1 to 6 wherein X is chloro.

7. The process of claims 1 to 6 wherein the elevated temperature is the reflux temperature of the solvent medium.

8. The process of claim 1 wherein the compound system comprises $MeSiHCl_2$ and isoprene or styrene.

**Patentansprüche**

1. Verfahren zur Herstellung von Keramikprodukten aus Siliciumcarbid durch Pyrolisieren in inerter Atmosphäre eines verzweigten Polycarbosilans enthaltend

A) Silyleinheiten der Formel

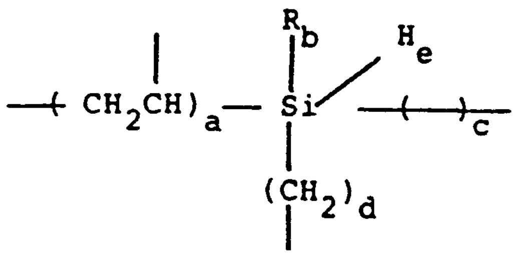

worin R eine niedere Alkylgruppe, a 0 oder 1, b 0—3, c zumindest 1, d die Anzahl der $CH_2$-Gruppen, die an Si gebunden sind, und 0—4 beträgt, e 1 oder 2 ist a + b + c + d + e 4 beträgt mit den Maßgaben, daß jede der Einheiten, a, b, c, d, e und R (abhängig von dem Monomeren, von welchen sie abstammen) unterschiedlich sind und daß in einer Vielzahl derartiger Einheiten a + c + d + e zumindest 3 beträgt — derart, daß die Verzweigung aus den Silyleinheiten stammt — und

B) Kohlenwasserstoffeinheiten abgeleitet von Olefinmonomeren der Formel:

$$R''_2C{=}CHR''$$

worin R'' Wasserstoff, Methyl, Phenyl oder Vinyl ist und zumindest eine der Substituernnten R'' Phenyl ode Vinyl ist, hergestellt durch Umsetzung bei erhöhter Temperatur in einem inerten Lösungsmedium mit einem aktiven Metall

a) einer Komponente enthaltend zumindest ein Silylmonomer der Formel (I)

$$(CH_2{=}CH)_aR_bSiX_c(CH_2X)_dH_e \qquad (I)$$

worin X ein Halogen ist mit oder ohne weiteren Silylmonomeren der Formel (I), wobei a + c + d + e 1 oder 2 ist, und

b) zumindest eines Olefinmonomeren der Formel (II)

$$R''_2C{=}CHR'' \qquad (II)$$

wobei das Molverhältnis der Silylmonomeren zu den Olefinmonomeren zumindest 0,67 beträgt.

2. Verfahren nach Anspruch 1, wobei R Methyl ist.

3. Verfahren nach Anspruch 1 oder 2, worin c 3 ist.

4. Verfahren nach Anspruch 1 bis 3, wobei das aktive Metall Kalium, Natrium oder deren Legierung ist.

5. Verfahren nach Anspruch 1 bis 4, wobei das inerte Lösungsmittel Tetrahydrofuran ist.

6. Verfahren nach Anspruch 1 bis 5, wobei X Chlor ist.

7. Verfahren nach Anspruch 1 bis 6, wobei die erhöhte Temperatur die Rückflußtemperatur des Lösungsmediums ist.

8. Verfahren nach Anspruch 1, wobei das Verbundsystem $MeSiHCl_2$ und Isopren oder Styrol enthält.

**Revendications**

1. Procédé de production de compositions céramiques de carbure de silicium par pyrolyse en atmosphère inerte d'un polycarbosilane ramifié comprenant

A) des motifs silyle de formule:

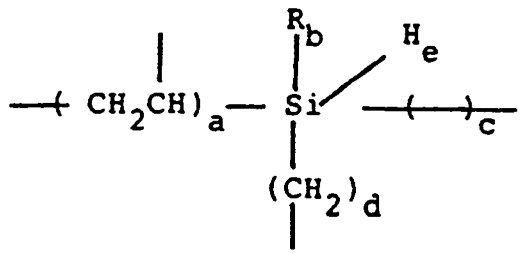

dans laquelle R représente un groupe alkyle inférieur, a est égal à 0 ou 1, b a une valeur de 0 à 3, c est au moins égal à 1, d représente le nombre de groupes $—CH_2—$ liés individuellement à Si et a une valeur de 0 à 4, e est égal à 1 ou 2, la somme $a + b + c + d + e$ est égale à 4, sous réserve une, dans chacun de l'ensemble des motifs, a, b, c, d, e et R puissent différer (suivant les monomères desquels ils proviennent) et que, dans plusieurs de ces motifs, la somme $a + c + d + e$ soit au moins égale à 3 (de sorte qu'une ramification provienne des motifs silyle), et

B) des motifs hydrocarbonés dérivés des monomères oléfiniques de formule:

$$R''_2C{=}CHR''$$

dans laquelle les groupes R'' sont choisis entre H, les groupes Me, phényle et vinyle, de sorte qu'au moins un groupe R'' représente un groupe phényle ou vinyle, obtenu par réaction, avec un métal actif dans un milieu inerte servant de solvant, à température élevée,

a) d'un composé comprenant au moins un monomère silyle de formule (I)

$$(CH_2{=}CH)_aR_bSiX_c(CH_2X)_dH_e \qquad (I)$$

dans laquelle X représente un groupe halogéno, avec ou sans d'autres monomères silyle de formule (I) dans laquelle la somme $a + c + d + e$ est égale à 1 ou 2, et

b) d'au moins un monomère oléfinique de formule (II)

$$R''_2C{=}CHR'' \qquad (II)$$

le rapport molaire entre le ou les monomères silyle et le ou les monomères oléfiniques étant au moins égal à 0,67.

2. Procédé suivant la revendication 1, dans lequel R représente un groupe méthyle.

3. Procédé suivant la revendication 1 ou 2, dans lequel c est égal à 3.

4. Procédé suivant les revendications 1 à 3, dans lequel le métal actif est le potassium, le sodium ou un alliage de ces deux métaux.

5. Procédé suivant les revendications 1 à 4, dans lequel le solvant inerte est le tétrahydrofuranne.

6. Procédé suivant les revendications 1 à 5, dans lequel X représente un groupe chloro.

7. Procédé suivant les revendications 1 à 6, dans lequel la température élevée est la température de reflux du milieu servant de solvant.

8. Procédé suivant la revendication 1, dans lequel l'association de composés consiste en $MeSiHCl_2$ et en isoprène ou styrène.